(19) Europäisches Patentamt

European Patent Office

Office européen des brevets

(11) **EP 1 003 400 B1**

(12) **EUROPEAN PATENT SPECIFICATION**

(45) Date of publication and mention
of the grant of the patent:
**03.07.2002 Bulletin 2002/27**

(21) Application number: **98945232.1**

(22) Date of filing: **12.08.1998**

(51) Int Cl.⁷: $A46D\ 9/02$

(86) International application number:
**PCT/EP98/05130**

(87) International publication number:
**WO 99/07255 (18.02.1999 Gazette 1999/07)**

(54) **A METHOD OF ENDROUNDING LOOSE FIBRES**

VERFAHREN ZUM ABRUNDEN DER ENDEN VON LOSEN FASERN

PROCEDE D'ARRONDISSAGE D'EXTREMITES DE FIBRES LACHES

(84) Designated Contracting States:
**AT BE CH CY DE DK ES FI FR GB GR IE IT LI NL
PT SE**
Designated Extension States:
**RO**

(30) Priority: **12.08.1997 GB 9717112**

(43) Date of publication of application:
**31.05.2000 Bulletin 2000/22**

(73) Proprietor: **G.B. BOUCHERIE, N.V.
8870 Izegem (BE)**

(72) Inventor: **BOUCHERIE, Bart, Gerard
B-8870 Izegem (BE)**

(74) Representative: **Degwert, Hartmut, Dipl.-Phys.
Prinz & Partner
Manzingerweg 7
81241 München (DE)**

(56) References cited:
**EP-A- 0 346 646        DE-U- 29 614 118
US-A- 2 554 777        US-A- 2 587 792
US-A- 5 007 686**

## Description

The present invention relates to a method of endrounding loose fibres of thermoplastic material for use in brush making, toothbrush making in particular.

Brushes for dental or cosmetical use must have bristles with rounded free ends to avoid injury or harm to the user. Rounding of the bristle ends is done after the bristles have been attached to a brush body by means of abrasive methods or radiation. According to a more recent technology, bristles are implant-molded with the brush body. This technology permits the use of pre-cut and pre-rounded fibre, avoiding a finishing step after the bristles have been attached to the brush body. It is more convenient to process the fibre for the purpose of endrounding before attachment to the brush body than performing the finishing steps with the bristles already attached to the brush body.

When an abrasive endrounding method is used, it is mandatory to have the free ends of the fibre perfectly aligned in a plane perpendicular to the length of the tuft or bundle presented to the working surface of the endrounding tool. This requirement has been recognized and confirmed in the patent literature, for example EP 0 346 646 B1. Unless this requirement is satisfied, the fibre ends are not consistently rounded and smoothened from all sides. Also, the amount of fibre that can be processed in a single step is limited because the fibre ends must be free to be laterally deflected so that the fibre end surface can be presented to and engaged by the working surface of the endrounding tool from all sides and directions.

Recently, a new endrounding technology has been proposed wherein a perfect and consistent rounding quality is achieved by producing friction rather than abrasion between the working surface of the endrounding tool and the free ends of the fibres. As disclosed in German Utility Model 296 14 118 the rounding effect achieved with this technology is not completely understood, but relative speed between the fibre ends and the working surface is an essential parameter. Relative speed must produce friction in an amount sufficient to heat the thermoplastic material of the fibre close to its melting point. but excessive heat would destroy the fibre ends. This technology has been successfully used on tufts of bristles attached to toothbrush bodies so that the bristles (or fibres) were exposed to the working surface of the endrounding tool in relatively small tufts. It was considered impossible to process large amounts of bristles or fibres in. a bundle because of the expected concentration of friction and heat in the central portion of the plane in which the free ends of the fibres are exposed. Such concentration of friction, and thus heat, in the central portion of the bundle is due to the increased lateral support of the fibres in the central portion against deflection by engagement with the endrounding tool. The fibre in the center portion of the bundle is stiffer because it is supported laterally by surrounding fibre.

Therefore, a uniform distribution of heat throughout the cross-section of the bundle cannot be achieved. As mentioned earlier, however, the new endrounding technology requires consistent heating conditions within close limits. A similar rounding technique is disclosed in US-A-2 554 777 where the fibres are processed while they are mounted on a brush.

The present invention provides a method of endrounding loose fibres of thermoplastic material for use in brushmaking wherein the new endrounding technology relying on friction rather than abrasion can be used and relatively large amounts of fibre can be processed at one time. According to the invention, the fibres are presented to an endrounding tool in a tuft or bundle of relatively large diameter, and the free ends of the fibres are exposed to the working surface of the tool to produce relative movement between the fibre ends and the working surface, causing the material of the fibres to be heated by friction of a predetermined intensity. While the fibres are exposed to the working surface of the tool, they are permitted to flex laterally and are held in an axial direction of the tuft or bundle with their free ends commonly defining a surface different from a plane which is perpendicular to the axial direction. Since the fibres have their ends lying in a plane different from a plane which is perpendicular to the axial direction of the tuft or bundle, the flexing resistance of each individual fibre can be adjusted in a manner to achieve consistent frictional heating throughout the cross-section of the tuft or bundle. Specifically, in the preferred embodiment the fibres have a cantilever length which is greater close to the centre of the tuft or bundle than closer to its periphery. From a geometrical point of view, the fibres have their free ends located in a surface of convex shape. The convex shape can be conical, frustroconical or hemispherical.

Further features and details of the invention will become apparent from the following description of several embodiments with reference to the drawings. In the drawings:

    Figs. 1, 2 and 3 shows three possible configurations of a bundle of fibre to be presented to an endrounding tool;

    Fig. 4 is an enlarged partial view of the configuration in Fig. 1;

    Fig. 5 is an enlarged partial view of the configuration in Fig. 3;

    Figs. 6, 7 and 8 are schematic illustrations of three embodiments of the new endrounding method.

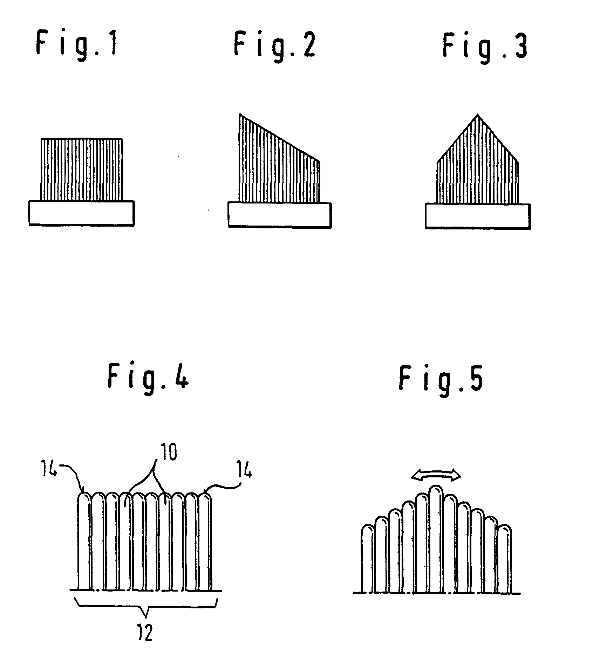

Fig. 1 shows the usual configuration of a cylindrical bundle of fibre the free ends of which define a plane perpendicular to the axial direction of the bundle. With this configuration, endrounding of the fibre is possible using a conventional abrasive method.

In the configuration of Fig. 3, the free ends of the fibres in the bundle define a surface of conical shape.

Referring now to Figs. 4 and 5, it will be seen in Fig. 4 that those fibres 10 in bundle 12 which are closer to the centre portion of the bundle are supported laterally by a greater number of surrounding fibres than those fibres 14 closer to the periphery of the bundle 12. Therefore, fibres which are closer to the periphery oppose less deflection resistance to an endrounding tool passing over the free ends of the fibre. It should be understood that, as seen in Figs. 1, 2 and 3, the bundle is clamped radially at a predetermined distance from the free ends of the fibre so that each fibre can be deflected laterally upon engagement with the working surface of the endrounding tool. In the conical configuration shown in Fig. 5, the fibres in the central portion of the bundle have a greater cantilever length than those closer to the periphery. Remembering that, in accordance with the theory of strength of materials, the lateral deflection is calculated by the cantilever beam formula

$$f = \frac{F \cdot l^3}{3\,E \cdot I}$$

in which:

> f=sideways displacement of the fibre tip
> F=force exerted on the end of the strand
> l=length of the fibre strand
> E, I=constants for a given material and beam section

it is easily seen that the greater deflection resistance of the fibres in the centre portion of the bundle due to lateral support by a greater number of surrounding fibres can be compensated by a greater cantilever length of the fibres in the central portion of the bundle. In the preferred embodiment, each fibre end in the bundle has a cantilever length determined to provide substantially consistent flexing resistance throughout the cross-section of the bundle with respect to lateral deflection upon engagement by the endrounding tool.

While the above requirement is best satisfied with the conical configuration shown in Fig. 3, it is possible to use the configuration of Fig. 2 where the free ends of the fibres define a plane inclined to a plane perpendicular to the axial direction of the bundle.

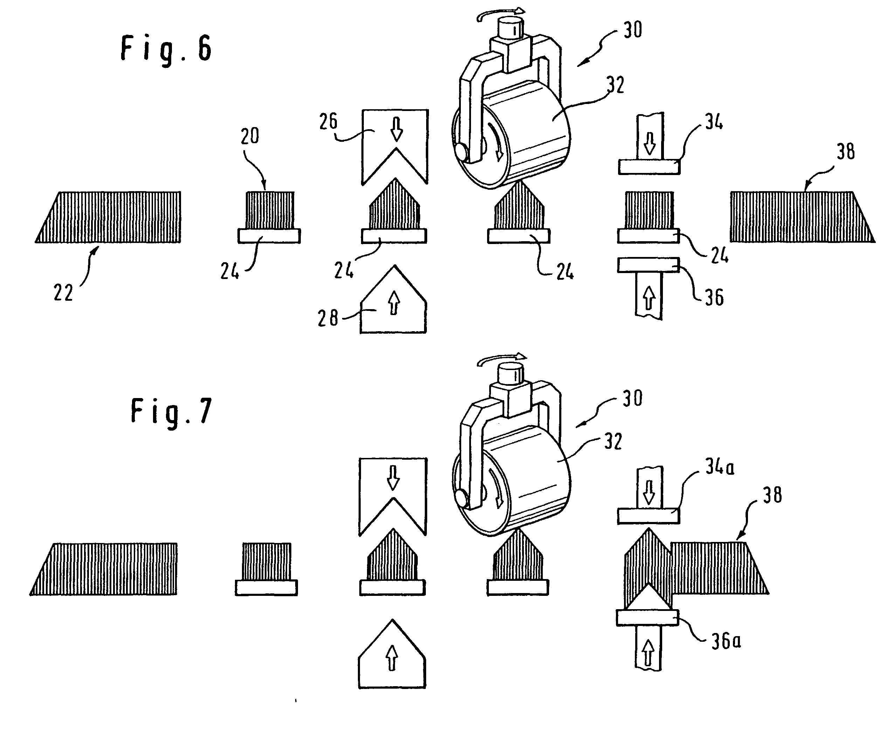

In the method illustrated at Fig. 6, individual tufts or bundles 20 are picked from a supply 22 of precut packed and parallel fibre. The tuft or bundle 20 is clamped radially and thus held axially in a clamp 24. Clamp 24 with the tuft or bundle 20 engaged therein is then moved between a pair of complementary plungers 26, 28, and clamp 24 is released. As seen in the drawings, plungers 26, 28 have complementary concave and convex profiling faces. When plungers 26, 28 are engaged with the axial ends of the tuft or bundle 20 while clamp 24 is released, the fibres are shifted axially with respect to each other, resulting in a configuration similar to that shown in Fig. 3. Clamp 24 is then engaged again and moved to an endrounding tool 30. Endrounding tool 30 has a rotating cylinder 32 defining a working surface which has frictional rather than abrasive properties. Details on the nature and material of the endrounding tool are found in German Utility Model No. 296 14 118. It should be noted here that the rotational speed of cylinder 32 is substantially in excess of that for similar endrounding tools which are abrasive in nature. Also, an important aspect of the endrounding tool is that cylinder 32 has an envelope of a material which produces friction and frictional heat upon contact with the free ends of fibres of thermoplastic material. Finally, it is important to have this coating of cylinder 32 thermally decoupled from the body of cylinder 32 so that the body of cylinder 32 does not form a heat sink. The shape of the endrounding tool is not critical. For example, a rotating disc could be used.

Although a single endrounding tool is shown in the drawings, the preferred method uses a plurality of processing steps. In each processing step, the free ends of the fibres in the bundle or tuft are exposed to a rotating endrounding tool.

After the last processing step has been completed, clamp 24 is moved to a discharge station where clamp 24 is released. The axial ends of the fibres are now engaged between a pair of plungers 34, 36 which have opposed flat alignment surfaces. The rounded ends of the processed fibres are now aligned in a plane, and the fibres are discharged in a box 38 containing finished fibres ready to be used in an implant-molding method where they are attached to a brush body while the brush body is injection-molded.

The embodiment in Fig. 7 differs from that of Fig. 6 only in that plungers 34a, 36a with tapping plates are used to align the finished fibres within box 38.

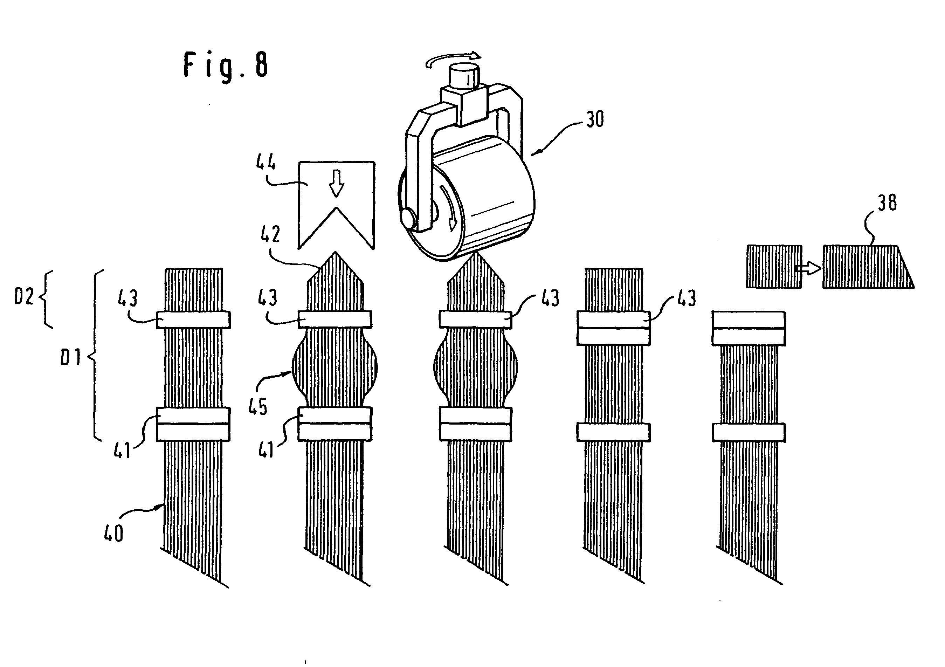

In the embodiment shown in Fig. 8, a continuous strand 40 of parallel fibre is clamped radially by means of a clamp 41 at a first distance D1 from the free ends of the fibres. A second clamp 43 is provided at a second distance D2 from the free ends of the fibres, but released. A profiling member 44 which has a concave conical profiling face is now engaged with the free ends of the fibres at 42 in Fig. 8. The fibres are shifted axially to align their free ends in a surface of the desired conical shape, and the outer fibres of the strand are bulged outwardly, as seen at 45 in Fig. 8. Clamp 43 is now engaged, and the free ends of the fibres are exposed to endrounding tool 30 as in the methods of Fig. 6 and 7. After all processing steps have been completed clamp 43 is released and the desired length of endrounded fibre is cut from the strand 40 and then moved to fibre box 38.

## Claims

1. A method of endrounding fibres of thermoplastic material for use in brush making, the fibres being presented to an endrounding tool (30) and the free ends of the fibres being exposed to a working surface (32) of the tool (30), relative movement between the fibre ends and working surface (32) causing the material of the fibres to be heated by friction of a predetermined intensity, wherein the fibres while they are exposed to the working surface of the tool are permitted to flex laterally and are held in an axial direction with their free ends commonly defining a surface different from a plane which is perpendicular to the axial direction, **characterized in that** the fibres are presented to the tool (30) as a bundle (20) or tuft of loose fibres clamped radially at a predetermined distance from the free ends of the fibres.

2. The method of claim 1, wherein the shape of said surface is different from a plane.

3. The method of claim 1, wherein the fibres have a cantilever length which is greater in portions of said surface closer to the center of the tuft or bundle (20) than in portions closer to the outer edge of said surface.

4. The method of claim 1, wherein said surface has a convex shape.

5. The method of claim 1, wherein said surface has a conical shape.

6. The method of claim 1, wherein said surface is a plane inclined to a plane perpendicular to said axial direction.

7. The method of claim 1, wherein each fibre end in the tuft or bundle (20) has a cantilever length determined to provide substantially consistent flexing resistance throughout the cross-section of said tuft or bundle (20) with respect to lateral deflection upon engagement by said working surface (32).

8. The method of any of claims 1 to 7, wherein said working surface (32) of said tool (30) is cylindrical.

9. The method of any of claims 1 to 8, wherein said tuft or bundle (20) is picked from a supply (22) of packed pre-cut fibre, at least one axial end face of said tuft or bundle (20) is engaged by a profiling member (26) having a profiling face corresponding to the shape of said surface to shift the fibres axially with respect to each other until the free ends of said fibres define said surface, the tuft or bundle (20) is clamped radially, the free ends of said fibres are exposed to said working surface (32) of said tool (30), said tuft or bundle (20) is released and said fibres are shifted axially with respect to each other to align their axial ends in a plane perpendicular to their length, and said fibres are deposited in a container (38) containing endrounded fibre.

10. The method of any of claims 1 to 8, wherein a continuous strand (40) of parallel fibre is clamped radially at a first distance (D1) from the free fibre ends while they are aligned in a plane, said free ends are engaged by a profiling member (44) having a profiling face corresponding to the shape of said surface to shift the fibres axially with respect to each other until the free ends of said fibres define said surface, the tuft or bundle is clamped radially at a second distance (D2) from said free fibre ends which is smaller than said first distance (D1), the free ends of said fibres are exposed to said working surface (32) of said tool (30), said strand (40) is released at said second distance (D2) from the free fibre ends to allow said fibres to shift axially with respect to each other to align their axial ends in a plane perpendicular to their length, a length of fibre including said free fibre ends is cut from said strand of fibre, and the cut fibre lengths are deposited in a container (38) containing endrounded fibre.

11. The method of claim 9 or claim 10, wherein the step of exposing the free ends of said fibres to said working surface (32) is repeated a plurality of times with different working tools.

## Patentansprüche

1. Verfahren zum Abrunden der Enden von Fasern aus einem thermoplastischen Material zur Verwendung bei der Bürstenherstellung, wobei die Fasern einem Endenverrundungswerkzeug (30) zugeführt werden und die freien Enden der Fasern einer Bearbeitungsfläche (32) des Werkzeugs (30) ausgesetzt werden, wobei eine Relativbewegung zwischen den Faserenden und der Bearbeitungsfläche (32) bewirkt, daß das Fasermaterial durch Reibung einer vorbestimmten Intensität erwärmt wird, bei dem sich die Fasern, während sie der Bearbeitungsfläche des Werkzeugs ausgesetzt sind, seitlich biegen dürfen und in axialer Richtung gehalten sind, wobei ihre freien Enden gemeinsam eine Fläche bilden, die von einer zu der axialen Richtung senkrechten Ebene verschieden ist, **dadurch gekennzeichnet, daß** die Fasern dem Werkzeug (30) als ein Bündel (20) oder Büschel loser Fasern zugeführt werden, das in einem vorbestimmten Abstand von den freien Enden der Fasern radial eingespannt ist.

**2.** Verfahren nach Anspruch 1, bei dem die Form der Fläche von einer Ebene verschieden ist.

**3.** Verfahren nach Anspruch 1, bei dem die Fasern einen freitragenden Abschnitt haben, der in Teilen der Fläche näher zur Mitte des Büschels oder Bündels (20) hin größer ist als in Teilen näher zum Außenrand der Fläche.

**4.** Verfahren nach Anspruch 1, bei dem die Fläche eine konvexe Form hat.

**5.** Verfahren nach Anspruch 1, bei dem die Fläche eine konische Form hat.

**6.** Verfahren nach Anspruch 1, bei dem die Fläche eine zu einer zu der axialen Richtung senkrechten Ebene schräge Ebene ist.

**7.** Verfahren nach Anspruch 1, bei dem jedes Faserende in dem Büschel oder Bündel (20) einen freitragenden Abschnitt hat, der so bestimmt ist, daß er über den gesamten Querschnitt des Büschels oder Bündels (20) bezüglich einer seitlichen Auslenkung beim Angriff der Bearbeitungsfläche (32) einen im wesentlichen gleichmäßigen Biegewiderstand bietet.

**8.** Verfahren nach einem der Ansprüche 1 bis 7, bei dem die Bearbeitungsfläche (32) des Werkzeugs (30) zylindrisch ist.

**9.** Verfahren nach einem der Ansprüche 1 bis 8, bei dem das Büschel oder Bündel (20) aus einem Vorrat (22) an gepackten, vorgeschnittenen Fasern entnommen wird, ein Profilierelement (26) mit einer Profilierfläche, die der Form der Fläche entspricht, an wenigstens einer axialen Stirnfläche des Büschels oder Bündels (20) so angreift, daß die Fasern axial zueinander verschoben werden, bis die freien Enden der Fasern die Fläche bilden, das Büschel oder Bündel (20) radial eingespannt wird, die freien Enden der Fasern der Bearbeitungsfläche (32) des Werkzeugs (30) ausgesetzt werden, das Büschel oder Bündel (20) freigegeben wird und die Fasern axial zueinander so verschoben werden, daß ihre axialen Enden in einer zu ihrer Länge senkrechten Ebene ausgerichtet werden, und die Fasern in einem Fasern mit verrundeten Enden enthaltenden Behälter (38) abgelegt werden.

**10.** Verfahren nach einem der Ansprüche 1 bis 8, bei dem ein endloser Strang (40) paralleler Fasern in einem ersten Abstand (D1) von den freien Faserenden radial eingespannt wird, während sie in einer Ebene ausgerichtet sind, ein Profilierelement (44) mit einer Profilierfläche, die der Form der Fläche entspricht, an diesen freien Enden so angreift, daß die Fasern axial zueinander verschoben werden, bis die freien Enden der Fasern die Fläche bilden, das Büschel oder Bündel in einem zweiten Abstand (D2) von den freien Faserenden, der kleiner als der erste Abstand (D1) ist, radial eingespannt wird, die freien Enden der Fasern der Bearbeitungsfläche (32) des Werkzeugs (30) ausgesetzt werden, der Strang (40) in dem zweiten Abstand (D2) von den freien Faserenden freigegeben wird, so daß die Fasern axial zueinander so verschoben werden können, daß ihre axialen Enden in einer zu ihrer Länge senkrechten Ebene ausgerichtet werden, ein Faserabschnitt mit den freien Faserenden von dem Faserstrang abgeschnitten wird und die abgeschnittenen Faserabschnitte in einem Fasern mit verrundeten Enden enthaltenden Behälter (38) abgelegt werden.

**11.** Verfahren nach Anspruch 9 oder Anspruch 10, bei dem der Schritt, bei dem die freien Enden der Fasern der Bearbeitungsfläche (32) ausgesetzt werden, mehrmals mit unterschiedlichen Bearbeitungswerkzeugen wiederholt wird.

## Revendications

**1.** Procédé d'arrondissage des extrémités de fibres en matière thermoplastique pour l'utilisation à la production de brosses, les fibres étant présentées à un outil d'arrondissage d'extrémités (30) et les extrémités libres des fibres étant exposées à une surface d'usinage (32) de l'outil (30), un mouvement relatif entre les extrémités de fibres et la surface d'usinage (32) entraînant le chauffage de la matière des fibres par friction d'une intensité prédéterminée, dans lequel les fibres, pendant leur exposition à la surface d'usinage de l'outil, peuvent fléchir latéralement et sont maintenues en direction axiale, leurs extrémités libres formant en commun une surface qui est différente d'un plan perpendiculaire à la direction axiale, **caractérisé en ce que** les fibres sont présentées à l'outil (30) sous forme d'une botte (20) ou touffe de fibres lâches qui est serrée radialement à une distance prédéterminée des extrémités libres des fibres.

**2.** Procédé selon la revendication 1, dans lequel la forme de la surface est différente d'un plan.

**3.** Procédé selon la revendication 1, dans lequel les fibres ont une longueur non soutenue qui est plus grande dans des portions de la surface plus proches du milieu de la touffe ou botte (20) que dans des portions plus proches du bord extérieur de la surface.

**4.** Procédé selon la revendication 1, dans lequel la surface a une forme convexe.

5. Procédé selon la revendication 1, dans lequel la surface a une forme conique.

6. Procédé selon la revendication 1, dans lequel la surface est un plan incliné par rapport à un plan perpendiculaire à la direction axiale.

7. Procédé selon la revendication 1, dans lequel chaque extrémité de fibre a une longueur non soutenue dans la touffe ou botte (20), qui est déterminée de manière à fournir sur toute la section transversale de la touffe ou de la botte (20) sensiblement la même résistance à la flexion par rapport à une déviation latérale lors de l'attaque de la surface d'usinage (32).

8. Procédé selon l'une quelconque des revendications 1 à 7, dans lequel la surface d'usinage (32) de l'outil (30) est cylindrique.

9. Procédé selon l'une quelconque des revendications 1 à 8, dans lequel la touffe ou botte (20) est prélevée d'une réserve (22) de fibres prédécoupées en paquets, au moins une surface frontale axiale de la touffe ou botte (20) est attaquée par un élément de profilage (26) avec une face de profilage qui correspond à la forme de la surface, de manière à déplacer les fibres axialement les unes par rapport aux autres jusqu'à ce que les extrémités libres des fibres forment la surface, la touffe ou botte (20) est serrée radialement, les extrémités libres des fibres sont exposées à la surface d'usinage (32) de l'outil (30), la touffe ou botte (20) est libérée, et les fibres sont déplacées axialement les unes par rapport aux autres de telle sorte que leurs extrémités axiales sont alignées dans un plan perpendiculaire à leur longueur, et les fibres sont déposées dans un récipient (38) contenant des fibres aux extrémités arrondies.

10. Procédé selon l'une quelconque des revendications 1 à 8, dans lequel un brin (40) continu de fibres parallèles est serré radialement à une première distance (D1) des extrémités libres de fibres alors qu'elles sont alignées dans un plan, les extrémités libres sont attaquées par un élément de profilage (44) avec une face de profilage correspondant à la forme de la surface, de manière à déplacer les fibres axialement les unes par rapport aux autres jusqu'à ce que les extrémités libres des fibres forment la surface, la touffe ou botte est serrée radialement à une deuxième distance (D2) des extrémités libres de fibres, qui est plus petite que la première distance (D1), les extrémités libres des fibres sont exposées à la surface d'usinage (32) de l'outil (30), le brin (40) est libéré à une deuxième distance (D2) des extrémités libres des fibres de sorte que les fibres peuvent être déplacées axialement les unes par rapport aux autres de telle sorte que leurs extrémités axiales sont alignées dans un plan perpendiculaire à leur longueur, une longueur de fibre avec les extrémités libres des fibres est découpée du brin de fibres, et les longueurs de fibres découpées sont déposées dans un récipient (38) contenant des fibres aux extrémités arrondies.

11. Procédé selon la revendication 9 ou la revendication 10, dans lequel l'étape au cours de laquelle les extrémités libres des fibres sont exposées à la surface d'usinage (32), est répétée plusieurs fois avec différents outils d'usinage.

Fig.1  Fig.2  Fig.3

Fig.4  Fig.5

Fig.6

EP 1 003 400 B1

30

32

26

20

34

38

24

24

24

24

36

22

28

Fig.7

30

32

34a

38

36a

Fig. 8